# EUROPEAN PATENT APPLICATION

(11) **EP 1 197 518 A1**
(43) Date of publication of application: **17.04.2002**
(21) Application number: 01902744.0
(22) Date of filing: 02.02.2001
(51) Int. Cl.: C08L 21/00, C08K 5/36

(54) **RUBBER COMPOSITION AND PNEUMATIC TIRE MADE WITH THE SAME**

(30) Priority: 04.02.2000 JP 2000027716; 04.02.2000 JP 2000027717; 04.02.2000 JP 2000027718; 01.03.2000 JP 2000055262; 31.05.2000 JP 2000162741; 31.05.2000 JP 2000162742; 31.05.2000 JP 2000162871; 31.05.2000 JP 2000162872; 08.06.2000 JP 2000172173
(71) Applicant: BRIDGESTONE CORPORATION, Tokyo 104-0031 (JP)
(72) Inventor: MOTOFUSA, Shinichi, Kodaira-shi, Tokyo 187-0031 (JP); TERATAI, Hiroyuki, Iruma-shi, Saitama 358-0004 (JP)
(74) Representative: Whalley, Kevin
(86) International application number: JP0100752
(87) International publication number: WO0157129

(57) **Abstract**

The present invention provides a rubber composition improved in the heat resistance, which is suitable for a reinforcing rubber for tire sidewall portions and a bead filler rubber. Also, provided is a pneumatic tire produced using the rubber composition. The rubber composition comprises (A) a natural rubber and/or a synthetic diene rubber and (B) at least one compound selected from the group consisting of a compound represented by the following Formula I:

R¹-S-S-A-S-S-R² (I)

wherein A represents an alkylene group having 2 to 10 carbon atoms, and R¹ and R² each independently represents a monovalent nitrogen-containing organic group; a citraconimide compound; and an acrylate compound. The pneumatic tire has a rubber layer for reinforcing tire sidewall and/or a bead filler each made of the rubber composition.

## Description

### Technical Field

The present invention relates to a rubber composition and to a pneumatic tire made of the rubber composition. More specifically, the present invention also relates to a heat-resistant rubber composition suitable as a sidewall reinforcing rubber and a bead filler rubber for tires, and to a pneumatic tire having a sidewall reinforcing rubber layer and a bead filler made of the rubber composition.

### Background Art

Stiffness of s sidewall portion of a tire has been enhanced by providing a reinforcing layer made of a rubber composition alone or a composite of a rubber composition and fibers, etc. A rubber composition conventionally used for such purposes is, however, likely to suffer from breaking of the crosslinking bridge formed by vulcanization, etc. or polymer chain scission of a polymer constituting the rubber component when, particularly, the temperature of the tire is elevated to 200 °C or higher during, for example, so-called runflat operation where the tire is operated under a lowered internal inflation pressure due to puncture, etc. These breakings reduce the elasticity of the rubber composition to deflect the tire largely, this promoting the heat generation of the tire and lowering the break limit of the rubber. As a result thereof, the tire failure occurs in relatively short period of use.

To elongate the service life of a tire before its failure, conventionally employed is a method of preventing the heat generation of the rubber composition by changing the formulation thereof so as to make the elasticity of the rubber composition as large as possible or the loss tangent (tan δ) as small as possible. However, the approach by changing the formulation produces only limited results. Therefore, in order to ensure a higher runflat durability, it has been inevitable to increase the amount of side reinforcing layer and/or bead filler. This, however, brings about disadvantages such as loss of ride performance and unacceptable noise levels during usual tire operations, and increase in weight.

### Disclosure of Invention

In view of the above problems in the prior art, a first object of the present invention is to provide a rubber composition having an improved heat-resistance, and suitable particularly for a reinforcing rubber for tire sidewall portions and for a tire bead filler rubber.

A second object of the present invention is to provide a pneumatic tire made of, at least in part, the rubber composition, particularly, a pneumatic tire showing an excellent durability during runflat operations.

As a result of extensive study in view of attaining the above objects, the inventors have found that a rubber composition containing a specific compound is excellent in heat resistance and is suitable for the sidewall reinforcing rubber and for the bead filler rubber for tires. The inventors have further found that a pneumatic tire having its sidewall reinforcing rubber layer and/or bead filler made of the rubber composition is excellent in the durability, particularly, during runflat operation. The invention has been accomplished on the basis of these findings.

Thus, the invention provides a rubber composition comprising (A) a natural rubber and/or a synthetic diene rubber and (B) at least one compound selected from the group consisting of a compound represented by the following Formula I:

R¹-S-S-A-S-S-R² (I)

wherein A represents an alkylene group having 2 to 10 carbon atoms, R¹ and R² each independently represents a monovalent nitrogen-containing organic group; a citraconimide compound; and an acrylate compound.

The invention also provides:
(1) the rubber composition wherein A of Formula I for the component B is hexamethylene group;
(2) the rubber composition wherein each of R¹ and R² of Formula I for the component B preferably contains at least one aromatic ring in addition to nitrogen atom;
(3) the rubber composition wherein the citraconimide compound for the component B is preferably a biscitraconimide compound;
(4) the rubber composition wherein the acrylate compound for the component B is preferably a multifunctional ester compound obtained by the reaction of a polyhydric alcohol with acrylic acid, or by the reaction of a polyhydric alcohol with acrylic acid and another carboxylic acid; and
(5) the rubber composition comprising, as the component B, at least two compounds selected from the group consisting of the compound represented by the following Formula I:

   R¹-S-S-A-S-S-R² (I)
wherein A is an alkylene group having 2 to 10 carbon atoms, R¹ and R² are each independently a monovalent nitrogen-containing organic group; a citraconimide compound; and an acrylate compound.

The invention further provides a pneumatic tire having a pair of right and left ring bead cores, a bead filler provided radially outward of each of the bead cores, a carcass layer comprising at least one ply which comprises a plurality of parallel cords embedded in a coating rubber, a belt layer provided radially outward of the carcass layer, a tread portion provided radially outward of the belt layer, a pair of sidewall portions provided at both right and left lateral edges of the tread portion, and a reinforcing rubber layer provided at the sidewall portions, the reinforcing rubber layer for the sidewall portions and/or the bead filler being made of the rubber composition defined above.

### Brief Description of Drawings

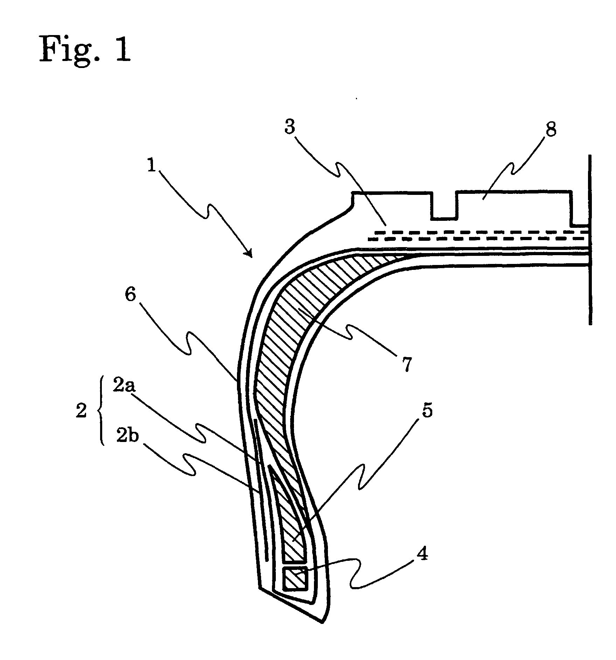

Fig. 1 is a partial cross-sectional view of a pneumatic tire of the present invention.

Reference numeral 1 is a pneumatic tire, 2 is a carcass layer, 2a is a turned-up carcass ply, 2b is a down carcass ply, 3 is a belt layer, 4 is a bead core, 5 is a bead filler, 6 is a sidewall portion, 7 is a reinforcing rubber layer, and 8 is a tread portion.

### Best Mode for Carrying Out the Invention

The rubber composition of the present invention contains a natural rubber and/or a synthetic diene rubber as the component A. Example of the synthetic diene rubber includes synthetic polyisoprene rubber (IR), polybutadiene rubber (BR), styrene-butadiene rubber (SBR), acrylonitrile-butadiene rubber (NBR), chloroprene rubber (CR), and butyl rubber (IIR). The natural rubber and the synthetic diene rubbers may be used as the component A singly or in combination of two or more.

To improve the heat resistance of the rubber composition, it is necessary to compound, as the component B, at least one compound selected from the group consisting of the compound represented by Formula I, the citraconimide compound, and the acrylate compound.

The improvement of the heat resistance of the rubber composition by the component B may be attributable to the function of the component B of efficiently forming more heat-resistant monosulfide linkages or C-C linkages, while a linkage between rubber polymers is broken at high temperatures.

The compounds for the component B will be described in more detail below.

In the compound represented by Formula I:

R¹-S-S-A-S-S-R² (I),

A is an alkylene group having 2 to 10 carbon atoms. The alkylene group may be linear, branched or cyclic, with a liner alkylene group being preferred. Examples of the alkylene group having 2 to 10 atoms include ethylene group, trimethylene group, tetramethylene group, pentamethylene group, hexamethylene group, heptamethylene group, octamethylene group, and decamethylene group, with hexamethylene group being preferred in view of obtaining the effect of the present invention.

Each of R¹ and R² is a monovalent nitrogen-containing organic group, preferably a monovalent nitrogen-containing organic group having at least one aromatic group, and more preferably a group containing =N-C(=S)- linkage which bonds to a dithio group through its carbon atom. R¹ and R² may be the same as or different from each other, and preferably the same in view of easy synthesis.

A preferred compound represented by Formula I is, for example, an α,ω-bis(N,N'-dihydrocarbylthiocarbamoyldithio)alkane represented by the following Formula I-a.

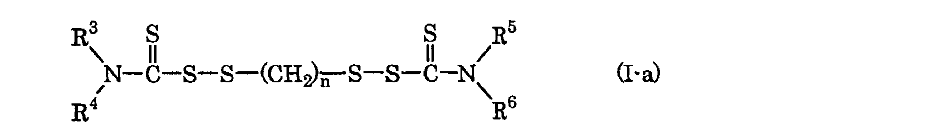

In Formula I-a, each of R³ to R⁶ is an alkyl group, an aryl group or an aralkyl group with the proviso that at least one of R³ and R⁴ and at least one of R⁵ and R⁶ are an aryl group or an aralkyl group, and n is an integer from 2 to 10.

The alkyl group preferably has 1 to 20 carbon atoms and may be straight, branched or cyclic. Examples of the alkyl group include methyl group, ethyl group, n-propyl group, isopropyl group, n-butyl group, isobutyl group, sec-butyl group, tert-butyl group, various pentyl groups, various hexyl groups, various octyl groups, various decyl groups, various dodecyl groups, various tetradecyl groups, various hexadecyl groups, various octadecyl groups, cyclopentyl group, cyclohexyl group, and cyclooctyl group.

The aryl group preferably has 6 to 20 carbon atoms and may have a substituent group such as a lower alkyl group on its ring. Examples of the aryl group include phenyl group, tolyl group, xylyl group, naphthyl group, and methylnaphthyl group.

The aralkyl group preferably has 7 to 20 carbon atoms and may have a substituent group such as a lower alkyl group on its ring. Examples of the aralkyl group include benzyl group, methylbenzyl group, dimethylbenzyl group, phenethyl group, methylphenethyl group, dimethylphenethyl group, naphthylmethyl group, (methylnaphthyl)methyl group, (dimethylnaphthyl)methyl group, naphthylethyl group, (methylnaphthyl)ethyl group, and (dimethylnaphthyl)ethyl group.

Preferably, R³ to R⁶ are all aryl groups or aralkyl groups described above, and more preferably, all benzyl groups in view of prevention of heat aging and easy production. Examples of such compound include 1,2-bis(N,N'-dibenzylthiocarbamoyl-dithio)ethane, 1,3- bis(N,N'-dibenzylthiocarbamoyldithio)propane, 1,4-bis(N,N'-dibenzylthiocarbamoyldithio)butane, 1,5-bis(N,N'-dibenzylthiocarbamoyl-dithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyl-dithio)octane, 1,9-bis(N,N'-dibenzylthiocarbamoyldithio)nonane, and 1,10-bis(N,N'-dibenzylthiocarbamoyldithio)decane. Of these compounds, 1,6-bis(N,N'-dibenzylthiocarbamoyldithio)hexane is particularly preferable because of its effectiveness.

The improvement of the heat resistance of the rubber composition by the compound of Formula I may be attributable to its function of efficiently forming more heat-resistant monosulfide crosslinkages, while a crosslinkage between rubber polymers is broken at high temperatures.

The citraconimide compound for the component B is preferably a biscitraconimide compound such as a compound represented by the following Formula II: 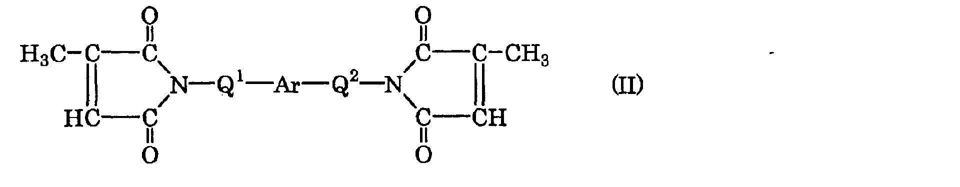 and 1,3-bis(citraconimido)benzene in view of obtaining the results of the invention.

In Formula II, Ar is an arylene group, preferably a non-substituted or ring-substituted arylene group having 6 to 20 carbon atoms. The substituent for the arylene group is not specifically limited as long as it does not adversely affect the vulcanization and is stable at high temperatures of 170 °C or higher. Examples thereof include a lower alkyl group, a lower alkoxyl group, halogen, nitro group, and cyano group. Examples of the arylene group include phenylene group and naphthylene group, with phenylene group being preferred.

Each of Q¹ and Q² is a linear or branched alkylene group having 1 to 4 carbon atoms such as methylene group, ethylene group, propylene group, and butylene group. Q¹ and Q² may be the same as or different from each other, preferably the same in view of easy production.

Examples of the compound of Formula (II) include 1,2-bis(citraconimidomethyl)benzene, 1,3-bis(citraconimidomethyl)benzene, 1,4-bis(citraconimidomethyl)benzene, 2,3-bis(citraconimidomethyl)toluene, 2,4-bis(citraconimidomethyl)toluene, 2,5-bis(citraconimidomethyl)toluene, 2,6-bis(citraconimidomethyl)toluene, and corresponding bis(citraconimidoethyl) compounds. Of these compound, 1,3-bis(citraconimidomethyl)benzene is particularly suitable because of its effectiveness.

The improvement of the heat resistance of the rubber composition by the citraconimide compound may be attributable to its function of readily forming C-C crosslinkage by reacting with a conjugated C=C which is generated in the main chain of rubber polymers as a result of breaking of a crosslinkage at high temperatures.

The acrylate compound for the component B is preferably, in view of the effectiveness, a multifunctional ester compound derived from the reaction of a polyhydric alcohol with acrylic acid, or the reaction of a polyhydric alcohol with acrylic acid and another carboxylic acid. Examples of the multifunctional ester compound include a compound represented by the following Formula III: 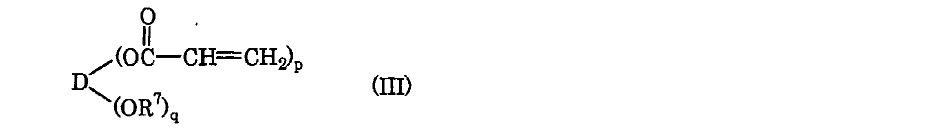 wherein D is a residue derived from a (p+q) valent polyhydric alcohol by removing a hydroxyl group and R⁷ is a hydrogen or an acyl group other than acryloyl group, p is an integer from 2 to 10, q is an integer from 0 to 8, and p+q is 2 to 10. The acyl group other than acryloyl group is preferably a saturated or unsaturated aliphatic acyl group having 2 to 20 carbon atoms, although not limited thereto.

Of the compounds of Formula III, preferred are those wherein p is an integer from 3 to 6, q is an integer from 0 to 3, and p+q is 3 to 6 in view of their effectiveness.

The polyhydric alcohol for producing the acrylate compound of Formula III is represented by the following Formula IV:

D-(OH)_{p+q} (IV)

wherein D, p and q are as defined above, and preferably a three to six valent alcohol such as glycerol, trimethylolethane, trimethylolpropane, diglycerol, pentaerythritol, dipentaerythritol, and sorbitol.

Suitable compounds of Formula III in view of the effectiveness are a multifunctional ester compound having 3 to 6 acryloyl group which is derived from dipentaerythritol and acrylic acid, and an acyl-modified dipentaerythritol acrylate having 3 to 5 acryloyl group. These compounds are commercially available. For example, a compound represented by the following formula: 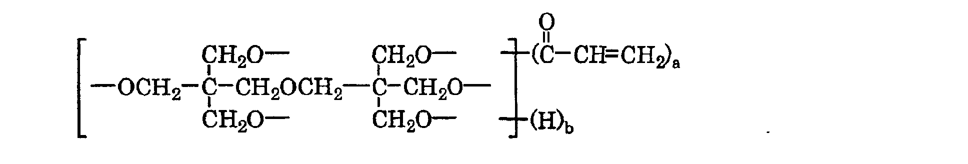 (a mixture of a compound wherein a = 5 and b = 1, and a compound wherein a = 6 and b = 0) is available as "KAYARAD DPHA" (trade mark, manufactured by Nippon Kayaku Co., Ltd.), and a compound represented by the following formula: 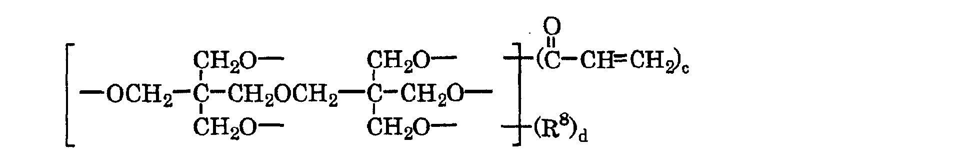 is available as "KAYARAD D-310" (trade name, manufactured by Nippon Kayaku Co., Ltd.) wherein R⁸ is an alkynoyl group, c = 5, and d = 1, and "KAYARAD D-330" (trade mark, manufactured by Nippon Kayaku Co., Ltd.) wherein R⁸ is an alkynoyl group, c = 3, and d = 3.

The improvement of the heat resistance of the rubber composition by the acrylate compound may be attributable to its function of effectively forming a C-C crosslinkage by the reaction with a conjugated C=C which is generated in the main chain of rubber polymers as a result of breaking of a crosslinkage at high temperatures.

In the production of a rubber composition using the acrylate compound, a kneading process thereof is carried out by controlling the highest temperature preferably to 140 °C or lower, more preferably 120 °C or lower. The acrylate compound may be kneaded simultaneously with a vulcanizing agent or separately.

To further improve the heat resistance of the rubber composition, it is preferred to use compounds of any combination of two or three groups selected from group 1: the compound of Formula I; group 2: the citraconimide compound; and group 3: the acrylate compound. From each group, one compound is usually selected, but, if desired, two or more compounds may be selected from any of the groups 1 to 3.

The component B comprising at least one compound as described above is compounded preferably in an amount of 0.5 to 20 parts by weight based on the rubber component as the component A. If less than 0.5 part by weight, the effect of preventing heat aging may be insufficient, thereby likely to fail to obtain a desired effect of improving the heat resistance. An amount exceeding 20 parts by weight produces little additional effect corresponding to the excessive use, and is costly disadvantageous and may cause deterioration of other properties of the resultant rubber composition. In considering the preventing effect on the heat aging, other properties of the rubber composition and production costs, the compounding amount of the component B is more preferably 0.7 to 15 parts by weight, the most preferably 1.0 to 10 parts by weight.

In addition to the component B, the rubber composition may further contain, if desired, another agent for preventing heat aging such as sodium 1,6-hexamethyleneditiosulfate dihydrate and a compound having two or more ester groups such as, but not limited thereto, an acrylate, a methacrylate, and preferably, a multifunctional ester compound derived form a reaction of a polyhydric alcohol with acrylic acid or methacrylic acid.

Examples of the polyhydric alcohol include alkylene glycols such as ethylene glycol, propylene glycol, butylene glycol, pentanediol, and hexanediol; polymers of the alkylene glycol; methylol-functionalized alkylene glycols; pentaerythritol and its derivatives; and polyhydric alcohol-alkylene oxide adducts; and polyesters or oligoesters having two or more alcoholic hydroxyl groups, with the methylol-functionalized alkylene glycols being particularly preferred.

Examples of the compound having two or more ester groups include 1,3-butylene glycol diacrylate, 1,5-pentanediol diacrylate, neopentyl glycol diacrylate, 1,6-hexanediol diacrylate, diethylene glycol diacrylate, triethylene glycol diacrylate, tetraethylene glycol diacrylate, polyethylene glycol diacrylate, polypropylene glycol diacrylate, pentaerythritol triacrylate, trimethylolpropane triacrylate, pentaerythritol tetracrylate, dipentaerythritol hexacrylate, dipentaerythritol pentacrylate, oligoester polyacrylate, dipropylene glycol dimethacrylate, trimethylolethane trimethacrylate, trimethylolpropane trimethacrylate, dipentaerythritol pentamethacrylate, and dipentaerythritol trimethacrylate, with dipentaerythritol methacrylate, dipentaerythritol trimethacrylate and trimethylolpropane methacrylate being particularly preferred.

Sodium 1,6-hexamethylenedithiosulfate dihydrate mentioned above prevents the breaking of a crosslinkage between the polymer chains constituting the rubber component. The compound having two or more ester groups is presumed to act as follows. When the temperature of the rubber composition is elevated to 170 °C or higher, the crosslinkages and polymer chains begin to be broken, thereby degrading the rubber composition. However, simultaneously with the breaking, the compound promotes the formation of carbon-to-carbon crosslinkages to prevent the loss of elasticity, thereby avoiding the heat generation of the rubber composition even at higher temperatures.

The rubber composition may further contains a reinforcing filler known in the rubber art without limitation. Preferred are carbon black, silica, and aluminum hydroxide. Silica and aluminum hydroxide can further reinforce the rubber when used with a coupling agent.

In addition to the above components, the rubber composition may further contains an additive known in the rubber art, for example, a vulcanizing agent such as sulfurs and peroxides, a vulcanization accelerator, an antioxidant, a softening agent, and an inorganic filler. The rubber composition may be made into a composite with particle, fiber and cloth of various materials.

The rubber composition of the present invention is excellent in the heat resistance and is suitable particularly for use in a tire bead filler rubber and a reinforcing rubber for a tire sidewall.

The heat resistance of the rubber composition is evaluated by the following method.

First, the dynamic storage elastic modulus of a vulcanized rubber composition is measured while raising the temperature, and draw a graph of the measured dynamic storage elastic modulus against the temperature. From the resultant curve, the peak value of the dynamic storage elastic modulus and its temperature, the bottom value of the dynamic storage elastic modulus and its temperature, and the dynamic storage elastic modulus at 250 °C are read. The ratio, bottom dynamic storage elastic modulus/peak dynamic storage elastic modulus, is calculated from the obtained values. The larger the ratio and the value of the dynamic storage elastic modulus at 250 °C, the higher the heat resistance.

Next, the pneumatic tire of the present invention will be described with reference to the attached drawing.

Fig. 1 is a partial cross-sectional schematic view of a pneumatic tire of the present invention. A pneumatic tire 1 has a pair of right and left ring shaped bead cores 4, a bead filler 5 provided at radially outward of each of the bead cores 4, a carcass layer 2 comprising at least one ply which comprises a plurality of parallel cords embedded in a coating rubber, a belt layer 3 provided at radially outward of the carcass layer 2, a tread portion 8 provided at radially outward of the belt layer 3, a pair of sidewall portions 6 provided at both right and left lateral edges of the tread portion 8, and a reinforcing rubber layer 7 at the sidewall portions 6.

The carcass layer 2 has a turned-up carcass ply 2a and a down carcass ply 2b. Both ends of the turned-up carcass ply 2a are turned-up around the pair of the bead cores 4 to form a pair of turnup ends. The bead filler 5 is located between the turned-up carcass ply 2a and its turnup end. The down carcass ply 2b is disposed between the sidewall portion 6 and the turnup end of the turned-up carcass ply 2a. The reinforcing rubber layer 7 is disposed inside the turned-up carcass ply 2a at the sidewall portion. The reinforcing rubber layer 7 for reinforcing the sidewall portion 6 may be a composite of a rubber with organic fibers or inorganic particles. The cross-sectional shape of the reinforcing rubber layer 7 is not specifically limited as far as the function of reinforcing the sidewall portion is attained. Air, nitrogen gas, etc. are used for inflating tires.

In the pneumatic tire of the present invention, either or both of the bead filler 5 and the reinforcing rubber layer 7 are made of the rubber composition of the present invention described above. Since the rubber composition of the invention maintains its elasticity within the intended level at low temperatures, the loss of ride performance and unacceptable noise levels due to the increase of elasticity do not substantially occur during normal operation of tire. Even when its temperature is elevated to 170 °C or higher by drastic change of shape due to puncture of tires, the rubber composition is resistant to the lowering of its elasticity. Therefore, the heat generation at high temperatures is prevented, thereby enhancing the durability of tires.

Therefore, with the use of a bead core or a rubber layer for reinforcing the sidewall portions made of the rubber composition of the present invention, the durability of pneumatic tires, particularly during the tire operations under the runflat conditions, can be dramatically improved, and the drive range in the runflat conditions can be remarkably extended.

The present invention will be described in more detail with reference to the following examples. However, it should be noted that the following examples are illustrative and not intended to limit the scope of the present invention thereto.

The properties of the rubber compositions and the runflat durability of tires were measured by the following methods.

### (1) Dynamic storage elastic modulus (E') and other properties of rubber composition

A sample of 5 mm wide and 40 mm long was cut out from a slab sheet with 2 mm thickness which was prepared by vulcanizing a rubber composition at 160 °C for 12 min.

The dynamic storage elastic modulus of the sample was measured by using a spectrometer manufactured by Ueshima Seisakusho Co., Ltd. under the following conditions:
Chuck interval: 10 mm
Initial strain: 200 µm
Dynamic strain: 1%
Frequency: 52 Hz
while raising the temperature from 25 °C to 250 °C at a rate of 3 °C/min. The measured dynamic storage elastic modulus was plotted against the temperature. From the resultant graph, the peak dynamic storage elastic modulus and its temperature, the bottom dynamic storage elastic modulus and its temperature, and the dynamic storage elastic modulus at 250 °C were read. From the obtained values, the ratio of bottom dynamic storage elastic modulus/peak dynamic storage elastic modulus was calculated.

In Examples 1 to 19, (bottom dynamic storage elastic modulus - peak dynamic storage elastic modulus)/(bottom temperature - peak temperature) (hereinafter referred to as "slope") was calculated.

Each of the above values is expressed by index numbers taking the value of Comparative Example 1, 2 or 3 as 100. The larger the index for the bottom dynamic storage elastic modulus/peak dynamic storage elastic modulus ratio, or larger the index for the dynamic storage elastic modulus at 250 °C, the higher the heat resistance. And, the smaller the index for the slope, the higher the heat resistance.

### (2) Runflat durability of tires

A tire was mounted on a rim under atmospheric pressure, and then, inflated with air to an internal pressure of 200 kPa. After allowed to stand at 38 °C for 24 h, the core of a valve was pulled out to deflate the tire to atmospheric pressure. The tire thus treated was subjected to a drum driving test at 38 °C at a driving speed of 89 km/h under a load of 5.6 kN (570 kg). The driving distance before the tire failure occurred is employed as the runflat durability and expressed by an index number taking the result of Comparative Example 1, 2 or 3 as 100. The larger the index, the better the runflat durability.

### EXAMPLES 1 to 19

As the component B represented by Formula I, Compounds A to E shown in Table 1 were used.

A rubber composition was prepared by compounding 100 parts by weight of a rubber component consisting 30.0 parts by weight of a natural rubber and 70.0 parts by weight of butadiene rubber "BR01" (trade mark of JSR Corporation.) with 60.0 parts by weight of carbon black FEF, 3.0 parts by weight of a spindle oil, 5.0 parts by weight of zinc white, 1.0 part by weight of stearic acid, 2.0 parts by weight of antioxidant "Nocrac 6C" (trade mark of Ouchi Shinko Chemical Industrial Co., Ltd..; N-phenyl-N'-(1,3-dimethylbutyl)-p-phenylenediamine), 2.5 parts by weight of a vulcanization accelerator "Nocceler-NS" (trade mark of Ouchi Shinko Chemical Industrial Co., Ltd..; N-tert-butyl-2-benzothiazolylsulphenamide), a compound for the component B of a kind and amount shown in Table 1, and 5.0 parts by weight of sulfur. The properties of the vulcanized product thereof are shown in Table 1.

According to a known method, a passenger radial tire of size 225/60R16 was produced, which has a bead filler and/or a reinforcing layer for sidewall portion (side reinforcing rubber) made of the above rubber composition. The result of the runflat durability test of the tire is shown in Table 1.

### COMPARATIVE EXAMPLE 1

A rubber composition shown in Table 1 was prepared in the same manner as in Example 1 except for omitting the use of the component B and changing the amount of sulfur to 6 parts by weight. The properties of the vulcanized product thereof are shown in Table 1.

In the same manner as in Example 1, a tire having a reinforcing layer for sidewall portion and a bead filler both made of the above rubber composition was produced. The result of the runflat durability test of the tire is shown in Table 1.

**Table 1-1**

| | Com. Ex. 1 | Examples | | | | | | |
|---|---|---|---|---|---|---|---|---|
| | | 1 | 2 | 3 | 4 | 5 | 6 | 7 |
| Rubber composition | C-1 | E-1 | E-2 | E-3 | E-4 | E-5 | E-6 | E-7 |
| Formulation | | | | | | | | |
| natural rubber | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 |
| component B | | | | | | | | |
| compound A of formula I | - | 0.4 | 0.5 | 1.0 | 3.0 | 5.0 | 10.0 | 0.4 |
| sulfur | 6.0 | 5.0 | 5.0 | 5.0 | 5.0 | 5.0 | 5.0 | 5.0 |
| Properties of vulcanized rubber composition (index) | | | | | | | | |
| peak temperature | 100 | 100 | 101 | 103 | 106 | 110 | 116 | 100 |
| peak E' | 100 | 100 | 103 | 105 | 110 | 116 | 120 | 100 |
| bottom temperature | 100 | 101 | 101 | 102 | 104 | 106 | 107 | 101 |
| bottom E' | 100 | 101 | 105 | 113 | 123 | 134 | 143 | 101 |
| bottom E'/peak E' | 100 | 101 | 103 | 107 | 113 | 116 | 118 | 101 |
| slope | 100 | 97 | 93 | 86 | 71 | 66 | 63 | 97 |
| Tire | | | | | | | | |
| constituting composition | | | | | | | | |
| side reinforcing rubber | C-1 | E-1 | E-2 | E-3 | E-4 | E-5 | E-6 | C-1 |
| bead filler rubber | C-1 | C-1 | C-1 | C-1 | C-1 | C-1 | C-1 | E-7 |
| runflat durability (index) | 100 | 102 | 105 | 113 | 124 | 135 | 145 | 100 |

**Table 1-2**

| | Examples | | | | | | | |
|---|---|---|---|---|---|---|---|---|
| | 8 | 9 | 10 | 11 | 12 | 13 | 14 | 15 |
| Rubber composition | E-8 | E-9 | E-10 | E-11 | E-12 | E-13 | E-14 | E-15 |
| Formulation | | | | | | | | |
| natural rubber | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 |
| component B | | | | | | | | |
| compound A of formula I | 0.5 | 1.0 | 3.0 | 5.0 | 10.0 | 1.0 | 3.0 | 5.0 |
| sulfur | 5.0 | 5.0 | 5.0 | 5.0 | 5.0 | 5.0 | 5.0 | 5.0 |
| Properties of vulcanized rubber composition (index) | | | | | | | | |
| peak temperature | 101 | 103 | 106 | 110 | 116 | 103 | 106 | 110 |
| peak E' | 103 | 105 | 110 | 116 | 120 | 106 | 110 | 116 |
| bottom temperature | 101 | 102 | 104 | 106 | 107 | 102 | 104 | 106 |
| bottom E' | 105 | 113 | 123 | 134 | 143 | 113 | 123 | 134 |
| bottom E'/peak E' | 103 | 107 | 113 | 116 | 118 | 107 | 113 | 116 |
| slope | 93 | 86 | 71 | 66 | 63 | 86 | 71 | 66 |
| Tire | | | | | | | | |
| constituting composition | | | | | | | | |
| side reinforcing rubber | C-1 | C-1 | C-1 | C-1 | C-1 | E-13 | E-14 | E-15 |
| bead filler rubber | E-8 | E-9 | E-10 | E-11 | E-12 | E-13 | E-14 | E-15 |
| runflat durability (index) | 102 | 105 | 110 | 116 | 121 | 122 | 141 | 160 |

**Table 1-3**

| | Examples | | | |
|---|---|---|---|---|
| | 16 | 17 | 18 | 19 |
| Rubber composition | E-16 | E-17 | E-18 | E-19 |
| Formulation | | | | |
| natural rubber | 30.0 | 30.0 | 30.0 | 30.0 |
| butadiene rubber | 70.0 | 70.0 | 70.0 | 70.0 |
| carbon black | 60.0 | 60.0 | 60.0 | 60.0 |
| softening agent | 3.0 | 3.0 | 3.0 | 3.0 |
| zinc white | 5.0 | 5.0 | 5.0 | 5.0 |
| stearic acid | 1.0 | 1.0 | 1.0 | 1.0 |
| antioxidant | 2.0 | 2.0 | 2.0 | 2.0 |
| vulcanization accelerator | 2.5 | 2.5 | 2.5 | 2.5 |
| component B | | | | |
| compound B of formula I | 3.0 | - | - | - |
| compound C of formula I | - | 3.0 | - | - |
| compound D of formula I | - | - | 3.0 | - |
| compound E of formula I | - | - | - | 3.0 |
| sulfur | 5.0 | 5.0 | 5.0 | 5.0 |
| Properties of vulcanized rubber composition (index) | | | | |
| peak temperature | 108 | 107 | 106 | 105 |
| peak E' | 112 | 109 | 110 | 110 |
| bottom temperature | 105 | 104 | 104 | 103 |
| bottom E' | 127 | 124 | 122 | 121 |
| bottom E'/peak E' | 114 | 113 | 111 | 110 |
| slope | 69 | 70 | 74 | 80 |
| Tire | | | | |
| constituting composition side reinforcing rubber | E-16 | E-17 | E-18 | E-19 |
| bead filler rubber | E-16 | E-17 | E-18 | E-19 |
| runflat durability (index) | 144 | 142 | 139 | 137 |
| Note: E' = dynamic storage elastic modulus | | | | |
| Com. Ex. = Comparative Example | | | | |
| (1) Compound of Formula I for component B | | | | |
| 1) Compound A: 1,6-bis(N,N'-dibenzylthiocarbamoyldithio)hexane (VULCUREN TRIAL PRODUCT KA9188 of Bayer Akiengesellschaft) | | | | |
| 2) Compound B: 1,6-bis(N,N'-dimethylthiocarbamoyldithio)hexane (trial product) | | | | |
| 3) Compound C: 1,6-bis(N,N'-diethylthiocarbamoyldithio)hexane (trial product) | | | | |
| 4) Compound D: 1,6-bis(N,N'-di(2-ethylhexyl)thiocarbamoyldithio)-hexane (trial product) | | | | |
| 5) Compound E: 1,6-bis(benzothiazolyldithio)hexane (trial product) | | | | |
| (2) Constituting composition: Each tire member was made of the respective rubber composition shown in Table 1. | | | | |

As seen from Table 1, the heat resistance was improved in the rubber compositions containing the compound of Formula I for the component B. In addition, the pneumatic tires having a bead filler or a reinforcing layer for sidewall made of the rubber composition of the invention is good in the runflat durability. In particular, the runflat durability is excellent when both the bead filler and the reinforcing layer for sidewall are made of the rubber composition of the invention.

### EXAMPLES 20 to 34

As the citraconimide compound for the component B, 1,3-bis(citraconimidomethyl)benzene was used.

Each rubber composition was prepared in the same manner as in Example 1 except for using, in place of 1,6-bis(N,N'-dibenzylthiocarbamoyldithio)hexane, 1,3-bis(citraconimidomethyl)benzene in respective amount shown in Table 2, and compounding sulfur in an amount of 6.0 parts by weight. The properties of the vulcanized product thereof are shown in Table 2.

According to a known method, each passenger radial tire of size 225/60R16 was produced, which has a reinforcing layer for sidewall portion and a bead filler each made of the respective rubber composition. The result of the runflat durability test of each tire is shown in Table 2.

**Table 2-1**

| | Com. Ex. 1 | Examples | | | | | | |
|---|---|---|---|---|---|---|---|---|
| | | 20 | 21 | 22 | 23 | 24 | 25 | 26 |
| Rubber composition | C-1 | E-20 | E-21 | E-22 | E-23 | E-24 | E-25 | E-26 |
| Formulation | | | | | | | | |
| natural rubber | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 |
| component B | | | | | | | | |
| citraconimide compound | - | 0.4 | 0.5 | 1.0 | 3.0 | 5.0 | 10.0 | 0.4 |
| sulfur | 6.0 | 6.0 | 6.0 | 6.0 | 6.0 | 6.0 | 6.0 | 6.0 |
| Properties of vulcanized rubber composition (index) | | | | | | | | |
| peak temperature | 100 | 100 | 100 | 100 | 101 | 102 | 103 | 100 |
| peak E' | 100 | 100 | 100 | 100 | 101 | 103 | 105 | 100 |
| bottom temperature | 100 | 99 | 99 | 98 | 95 | 93 | 90 | 99 |
| bottom E' | 100 | 101 | 102 | 106 | 114 | 126 | 135 | 101 |
| bottom E'/peak E' | 100 | 101 | 103 | 106 | 113 | 123 | 128 | 101 |
| E' at 250 °C | 100 | 102 | 106 | 112 | 120 | 137 | 146 | 102 |
| Tire | | | | | | | | |
| c onstituting composition | | | | | | | | |
| side reinforcing rubber | C-1 | E-20 | E-21 | E-22 | E-23 | E-24 | E-25 | C-1 |
| bead filler rubber | C-1 | C-1 | C-1 | C-1 | C-1 | C-1 | C-1 | E-26 |
| runflat durability (index) | 100 | 101 | 104 | 107 | 116 | 132 | 143 | 100 |

**Table 2-2**

| | | | Examples | | | | | |
|---|---|---|---|---|---|---|---|---|
| | 27 | 28 | 29 | 30 | 31 | 32 | 33 | 34 |
| Rubber composition | E-27 | E-28 | E-29 | E-30 | E-31 | E-32 | E-33 | E-34 |
| Formulation | | | | | | | | |
| natural rubber | 30 | 30 | 30 | 30 | 30 | 30 | 30 | 30 |
| butadiene rubber | 70 | 70 | 70 | 70 | 70 | 70 | 70 | 70 |
| carbon black | 60 | 60 | 60 | 60 | 60 | 60 | 60 | 60 |
| softening agent | 3 | 3 | 3 | 3 | 3 | 3 | 3 | 3 |
| zinc white | 5 | 5 | 5 | 5 | 5 | 5 | 5 | 5 |
| stearic acid | 1 | 1 | 1 | 1 | 1 | 1 | 1 | 1 |
| antioxidant | 2 | 2 | 2 | 2 | 2 | 2 | 2 | 2 |
| vulcanization accelerator | 2.5 | 2.5 | 2.5 | 2.5 | 2.5 | 2.5 | 2.5 | 2.5 |
| component B | | | | | | | | |
| citraconimide compound | 0.5 | 1 | 3 | 5 | 10 | 1 | 3 | 5 |
| sulfur | 6 | 6 | 6 | 6 | 6 | 6 | 6 | 6 |
| Properties of vulcanized rubber composition (index) | | | | | | | | |
| peak temperature | 100 | 100 | 101 | 102 | 103 | 100 | 101 | 102 |
| peak E' | 100 | 100 | 101 | 103 | 105 | 100 | 101 | 103 |
| bottom temperature | 99 | 98 | 95 | 93 | 90 | 98 | 95 | 93 |
| bottom E' | 102 | 106 | 114 | 126 | 135 | 106 | 114 | 126 |
| bottom E'/peak E' | 103 | 106 | 113 | 123 | 128 | 106 | 113 | 123 |
| E' at 250 °C | 106 | 112 | 120 | 137 | 146 | 112 | 120 | 137 |
| Tire | | | | | | | | |
| constituting composition | | | | | | | | |
| side reinforcing rubber | C-1 | C-1 | C-1 | C-1 | C-1 | E-32 | E-33 | E-34 |
| bead filler rubber | E-27 | E-28 | E-29 | E-30 | E-31 | E-32 | E-33 | E-34 |
| runflat durability (index) | 102 | 103 | 106 | 111 | 115 | 115 | 132 | 158 |
| Note: E' = dynamic storage elastic modulus | | | | | | | | |
| Com. Ex. = Comparative Example | | | | | | | | |
| (1) Component B (citraconimide compound) | | | | | | | | |
| 1,3-bis(citraconimidomethyl)benzene (PERKALINK 900, trade mark of Flexis Co. Ltd.) | | | | | | | | |
| (2) Constituting composition: Each tire member was made of the respective rubber composition shown in Table 2. | | | | | | | | |

### EXAMPLES 35 to 53

As the citraconimide compound for the component B, 1,3-bis(citraconimido)benzene was used. In Examples 52 and 53, the compound of Formula I used above or an acrylate compound was combinedly used.

Each rubber composition was prepared in the same manner as in Example 20 except for using, as the component B, respective compound in respective amount shown in Table 3, and using sulfur in an amount of 5.0 parts by weight. The properties of the vulcanized product thereof are shown in Table 3.

### COMPARATIVE EXAMPLE 2

A rubber composition shown in Table 3 was prepared in the same manner as in Example 35 except for omitting the use of the component B. The properties of the vulcanized product thereof are shown in Table 3.

Then, each tire was produced in the same manner as in Example 35 while forming the reinforcing layer for sidewall and the bead filler by respective rubber composition. The result of the runflat durability test of each tire is shown in Table 3.

**Table 3-1**

| | Com. Ex. 1 | Examples | | | | | |
|---|---|---|---|---|---|---|---|
| | | 35 | 36 | 37 | 38 | 39 | 40 |
| Rubber composition | C-2 | E-35 | E-36 | E-37 | E-38 | E-39 | E-40 |
| Formulation | | | | | | | |
| natural rubber | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 |
| component B | | | | | | | |
| 1.3-bis(citraconimido)- benzene | - | 0.2 | 0.3 | 0.5 | 1.0 | 3.0 | 5.0 |
| compound A of formula I | - | - | - | - | - | - | - |
| compound B of formula I | - | - | - | - | - | - | - |
| acrylate compound A | - | - | - | - | - | - | - |
| acrylate compound B | - | - | - | - | - | - | - |
| sulfur | 5.0 | 5.0 | 5.0 | 5.0 | 5.0 | 5.0 | 5.0 |
| Properties of vulcanized rubber composition (index) | | | | | | | |
| peak temperature | 100 | 100 | 100 | 100 | 101 | 101 | 101 |
| peak E' | 100 | 100 | 101 | 102 | 103 | 105 | 107 |
| bottom temperature | 100 | 99 | 98 | 96 | 95 | 94 | 92 |
| bottom E' | 100 | 101 | 103 | 106 | 110 | 118 | 130 |
| bottom E'/peak E' | 100 | 101 | 102 | 104 | 107 | 112 | 121 |
| E' at 250 °C | 100 | 103 | 106 | 110 | 116 | 127 | 141 |
| Tire | | | | | | | |
| constituting composition | | | | | | | |
| side reinforcing rubber | C-2 | E-35 | E-36 | E-37 | E-38 | E-39 | E-40 |
| bead filler rubber | C-2 | C-2 | C-2 | C-2 | C-2 | C-2 | C-2 |
| runflat durability (index) | 100 | 101 | 103 | 106 | 110 | 122 | 133 |

**Table 3-2**

| | Examples | | | | | | |
|---|---|---|---|---|---|---|---|
| | 41 | 42 | 43 | 44 | 45 | 46 | 47 |
| Rubber composition | E-41 | E-42 | E-43 | E-44 | E-45 | E-46 | E-47 |
| Formulation | | | | | | | |
| natural rubber | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 |
| component B | | | | | | | |
| 1.3-bis(citraconimido)- benzene | 10.0 | 0.2 | 0.3 | 0.5 | 1.0 | 3.0 | 5.0 |
| compound A of formula I | - | - | - | - | - | - | - |
| compound B of formula I | - | - | - | - | - | - | - |
| acrylate compound A | - | - | - | - | - | - | - |
| acrylate compound B | - | - | - | - | - | - | - |
| sulfur | 5.0 | 5.0 | 5.0 | 5.0 | 5.0 | 5.0 | 5.0 |
| Properties of vulcanized rubber composition (index) | | | | | | | |
| peak temperature | 101 | 100 | 100 | 100 | 101 | 101 | 101 |
| peak E' | 110 | 100 | 101 | 102 | 103 | 105 | 107 |
| bottom temperature | 90 | 99 | 98 | 96 | 95 | 94 | 92 |
| bottom E' | 143 | 101 | 103 | 106 | 110 | 118 | 130 |
| bottom E'/peak E' | 130 | 101 | 102 | 104 | 107 | 112 | 121 |
| E' at 250 °C | 155 | 103 | 106 | 110 | 116 | 127 | 141 |
| Tire | | | | | | | |
| constituting composition | | | | | | | |
| side reinforcing rubber | E-41 | C-2 | C-2 | C-2 | C-2 | C-2 | C-2 |
| bead filler rubber | C-2 | E-42 | E-43 | E-44 | E-45 | E-46 | E-47 |
| runflat durability (index) | 148 | 100 | 102 | 104 | 106 | 110 | 116 |

**Table 3-3**

| | Examples | | | | | |
|---|---|---|---|---|---|---|
| | 48 | 49 | 50 | 51 | 52 | 53 |
| Rubber composition | E-48 | E-49 | E-50 | E-51 | E-52 | E-53 |
| Formulation | | | | | | |
| natural rubber | 30.0 | 30.0 | 30.0 | 30.0 | 30.0 | 30.0 |
| butadiene rubber | 70.0 | 70.0 | 70.0 | 70.0 | 70.0 | 70.0 |
| carbon black | 60.0 | 60.0 | 60.0 | 60.0 | 60.0 | 60.0 |
| softening agent | 3.0 | 3.0 | 3.0 | 3.0 | 3.0 | 3.0 |
| zinc white | 5.0 | 5.0 | 5.0 | 5.0 | 5.0 | 5.0 |
| stearic acid | 1.0 | 1.0 | 1.0 | 1.0 | 1.0 | 1.0 |
| antioxidant | 2.0 | 2.0 | 2.0 | 2.0 | 2.0 | 2.0 |
| vulcanization accelerator | 2.5 | 2.5 | 2.5 | 2.5 | 2.5 | 2.5 |
| component B | | | | | | |
| 1.3-bis(citraconimido)- | 10.0 | 1.0 | 3.0 | 5.0 | 3.0 | 3.0 |
| benzene | | | | | | |
| compound A of formula I | - | - | - | - | 3.0 | - |
| compound B of formula I | - | - | - | - | - | 3.0 |
| acrylate compound A | - | - | - | - | 3.0 | - |
| acrylate compound B | - | - | - | - | | 3.0 |
| sulfur | 5.0 | 5.0 | 5.0 | 5.0 | 5.0 | 5.0 |
| Properties of vulcanized rubber composition (index) | | | | | | |
| peak temperature | 101 | 101 | 101 | 101 | 107 | 108 |
| peak E' | 110 | 103 | 105 | 107 | 119 | 123 |
| bottom temperature | 90 | 95 | 94 | 92 | 93 | 94 |
| bottom E' | 143 | 110 | 118 | 130 | 155 | 163 |
| bottom E'/peak E' | 130 | 107 | 112 | 121 | 130 | 133 |
| E' at 250 °C | 155 | 116 | 127 | 141 | 160 | 168 |
| Tire | | | | | | |
| constituting composition | | | | | | |
| side reinforcing rubber | C-2 | E-49 | E-50 | E-51 | E-52 | E-53 |
| bead filler rubber | E-48 | E-49 | E-50 | E-51 | E-52 | E-53 |
| runflat durability (index) | 120 | 121 | 138 | 158 | 201 | 209 |
| Note: Com. Ex. = Comparative Example | | | | | | |

As seen from Tables 2 and 3, the heat resistance was improved in the rubber compositions containing the citraconimide compound as the component B. In addition, the pneumatic tires having a bead filler or a reinforcing layer for sidewall made of the rubber composition of the invention is good in the runflat durability. In particular, the runflat durability is excellent when both the bead filler and the reinforcing layer for sidewall are made of the rubber composition of the invention.

### EXAMPLES 54 to 72

As the component B, the acrylate compounds A to C shown in Table 4 were used.

A rubber component (100 parts by weight) consisting of 30.0 parts by weight of a natural rubber and 70.0 parts by weight of butadiene rubber "BR01" (trade mark of JSR Corporation.) was kneaded at a maximum temperature of 100 °C with 60.0 parts by weight of carbon black FEF, 3.0 parts by weight of a spindle oil, 5.0 parts by weight of zinc white, 1.0 part by weight of stearic acid, and 2.0 parts by weight of an antioxidant "Nocrac 6C" (trade mark of Ouchi Shinko Chemical Industrial Co., Ltd.; N-phenyl-N'-(1,3-dimethylbutyl)-p-phenylenediamine). The resultant product was further kneaded with 2.5 parts by weight of a vulcanization accelerator "Nocceler-NS" (trade mark of Ouchi Shinko Chemical Industrial Co., Ltd.; N-tert-butyl-2-benzothiazolylsulphenamide), the component B of a kind in an amount shown in Table 4, and 6.0 parts by weight of sulfur at a maximum temperature of 100 °C, thereby preparing a rubber composition. The component B was added in a 50 wt % supported form on silica (Nipsil AQ available from Nippon Silica Industrial Co., Ltd.). The properties of the vulcanized product thereof are shown in Table 4.

According to a known method, a passenger radial tire of size 225/60R16 was produced, which has a bead filler and/or a reinforcing layer for sidewall portion (side reinforcing rubber) made of each rubber composition. The result of the runflat durability test of each tire is shown in Table 4.

### COMPARATIVE EXAMPLE 3

In the same manner as in Example 54 except for omitting the use of the component B, a rubber composition shown in Table 4 was prepared. The properties of the vulcanized product thereof are shown Table 4.

In the same manner as in Example 54, a tire having a reinforcing layer for sidewall portion and a bead filler both made of the above rubber composition was produced. The result of the runflat durability test of the tire is shown in Table 4.

**Table 4-1**

| | Com. Ex. 3 | Examples | | | | | | | |
|---|---|---|---|---|---|---|---|---|---|
| | | 54 | 55 | 56 | 57 | 58 | 59 | 60 | 61 |
| Rubber composition | C-3 | E-54 | E-55 | E-56 | E-57 | E-58 | E-59 | E-60 | E-61 |
| Formulation | | | | | | | | | |
| natural rubber | 30.0 | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 | 2.5 |
| component B | | | | | | | | | |
| acrylate compound A | - | 0.4 | 0.5 | 1.0 | 3.0 | 5.0 | 10.0 | 20.0 | 0.4 |
| sulfur | 6.0 | 6.0 | 6.0 | 6.0 | 6.0 | 6.0 | 6.0 | 6.0 | 6.0 |
| Properties of vulcanized rubber composition (index) | | | | | | | | | |
| peak temperature | 100 | 100 | 100 | 100 | 100 | 102 | 103 | 103 | 100 |
| peak E' | 100 | 102 | 104 | 107 | 111 | 114 | 118 | 123 | 102 |
| bottom temperature | 100 | 100 | 99 | 99 | 98 | 95 | 92 | 90 | 100 |
| bottom E' | 100 | 101 | 105 | 114 | 121 | 131 | 140 | 147 | 101 |
| bottom E'/peak E' | 100 | 100 | 102 | 106 | 109 | 115 | 119 | 120 | 100 |
| E' at 250 °C | 100 | 103 | 108 | 117 | 127 | 140 | 149 | 155 | 103 |
| Tire | | | | | | | | | |
| constituting composition | | | | | | | | | |
| side reinforcing rubber | C-3 | E-54 | E-55 | E-56 | E-57 | E-58 | E-59 | E-60 | C-3 |
| bead filler rubber | C-3 | C-3 | C-3 | C-3 | C-3 | C-3 | C-3 | C-3 | E-61 |
| runflat durability (index) | 100 | 102 | 106 | 114 | 123 | 134 | 142 | 149 | 100 |

**Table 4-2**

| | Examples | | | | | | | | |
|---|---|---|---|---|---|---|---|---|---|
| | 62 | 63 | 64 | 65 | 66 | 67 | 68 | 69 | 70 |
| Rubber composition | E-62 | E-63 | E-64 | E-65 | E-66 | E-67 | E-68 | E-69 | E-70 |
| Formulation | | | | | | | | | |
| natural rubber | 30.0 | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 | 2.5 |
| component B | | | | | | | | | |
| acrylate compound A | 0.5 | 1.0 | 3.0 | 5.0 | 10.0 | 20.0 | 1.0 | 3.0 | 5.0 |
| sulfur | 6.0 | 6.0 | 6.0 | 6.0 | 6.0 | 6.0 | 6.0 | 6.0 | 6.0 |
| Properties of vulcanized rubber composition (index) | | | | | | | | | |
| peak temperature | 100 | 100 | 100 | 102 | 103 | 103 | 100 | 100 | 102 |
| peak E' | 104 | 107 | 111 | 114 | 118 | 123 | 107 | 111 | 114 |
| bottom temperature | 99 | 99 | 98 | 95 | 92 | 90 | 99 | 98 | 95 |
| bottom E' | 105 | 114 | 121 | 131 | 140 | 147 | 114 | 121 | 131 |
| bottom E'/peak E' | 102 | 106 | 109 | 115 | 119 | 120 | 106 | 109 | 115 |
| E' at 250 °C | 108 | 117 | 127 | 140 | 149 | 155 | 117 | 127 | 140 |
| Tire | | | | | | | | | |
| constituting composition | | | | | | | | | |
| side reinforcing rubber | C-3 | C-3 | C-3 | C-3 | C-3 | C-3 | E-68 | E-69 | E-70 |
| bead filler rubber | E-62 | E-63 | E-64 | E-65 | E-66 | E-67 | E-68 | E-69 | E-70 |
| runflat durability (index) | 103 | 107 | 111 | 116 | 120 | 124 | 125 | 140 | 159 |

**Table 4-3**

| | Examples | |
|---|---|---|
| | 71 | 72 |
| Rubber composition | E-71 | E-72 |
| Formulation | | |
| natural rubber | 30.0 | 30.0 |
| butadiene rubber | 70.0 | 70.0 |
| carbon black | 60.0 | 60.0 |
| softening agent | 3.0 | 3.0 |
| zinc white | 5.0 | 5.0 |
| stearic acid | 1.0 | 1.0 |
| antioxidant | 2.0 | 2.0 |
| vulcanization accelerator | 2.5 | 2.5 |
| component B | | |
| acrylate compound B | 3.0 | - |
| acrylate compound C | - | 3.0 |
| sulfur | 6.0 | 6.0 |
| Properties of vulcanized rubber composition (index) | | |
| peak temperature | 100 | 100 |
| peak E' | 113 | 109 |
| bottom temperature | 97 | 98 |
| bottom E' | 126 | 118 |
| bottom E'/peak E' | 111 | 108 |
| E' at 250 °C | 130 | 124 |
| Tire | | |
| constituting composition | | |
| side reinforcing rubber | E-71 | E-72 |
| bead filler rubber | E-71 | E-72 |
| runflat durability (index) | 142 | 137 |

| | | |
|---|---|---|
| Note: E' = dynamic storage elastic modulus Com. Ex. = Comparative Example (1) Component B (acrylate compound) 1) Acrylate compound A: "KAYARAD D310" (trade mark of Nippon Kayaku Co., Ltd.) 2) Acrylate compound B: "KAYARAD DPHA" (trade mark of Nippon Kayaku Co., Ltd.) 3) Acrylate compound C: "KAYARAD D330" (trade mark of Nippon Kayaku Co., Ltd.) (2) Constituting composition: Each tire member was made of the respective rubber composition shown in Table 4. | | |

As seen from Table 4, the heat resistance was improved in the rubber compositions containing an acrylate compound as the component B. In addition, the pneumatic tires having a bead filler or a reinforcing layer for sidewall made of the rubber composition of the invention is good in the runflat durability. In particular, the runflat durability is excellent when both the bead filler and the reinforcing layer for sidewall are made of the rubber composition of the invention.

### EXAMPLES 73 to 153

Each rubber composition was prepared in the same manner as in Example 1 except for using, as the component B, two or three kinds of compounds in respective amounts as shown in Table 5, and compounding 5.0 or 6.0 parts by weight of sulfur. The properties of the vulcanized product thereof are shown in Table 5.

According to a known method, a passenger radial tire of size 225/60R16 was produced, which has a reinforcing layer for sidewall portion and a bead filler both made of each rubber composition. The result of the runflat durability test of each tire is shown in Table 5.

For comparison, the results of Examples 1, 20 and 54 (Table 5-1) and Examples 7, 26 and 61 (Table 5-5), in which only one compound was used as the component B, are recompiled.

**Table 5-1**

| | Com. Ex. 1 | Examples | | | | | | |
|---|---|---|---|---|---|---|---|---|
| | | 1 | 20 | 54 | 73 | 74 | 75 | 76 |
| Rubber composition | C-1 | E-1 | E-20 | E-54 | E-73 | E-74 | E-75 | E-76 |
| Formulation | | | | | | | | |
| natural rubber | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 |
| compound A of formula I | - | 0.4 | - | - | 0.4 | 0.4 | - | 0.1 |
| citraconimide compound A | - | - | 0.4 | - | 0.1 | - | 0.4 | 0.4 |
| acrylate compound A | - | - | - | 0.4 | - | 0.1 | 0.1 | - |
| sulfur | 6.0 | 5.0 | 6.0 | 6.0 | 5.0 | 5.0 | 6.0 | 6.0 |
| Properties of vulcanized rubber composition (index) | | | | | | | | |
| peak temperature | 100 | 100 | 100 | 100 | 100 | 100 | 100 | 101 |
| peak E' | 100 | 100 | 100 | 102 | 100 | 101 | 103 | 102 |
| bottom temperature | 100 | 101 | 99 | 100 | 100 | 100 | 98 | 99 |
| bottom E' | 100 | 101 | 101 | 101 | 101 | 103 | 103 | 103 |
| bottom E'/peak E' | 100 | 101 | 101 | 100 | 102 | 102 | 101 | 102 |
| E' at 250 °C | 100 | 103 | 102 | 103 | 104 | 105 | 105 | 104 |
| Tire | | | | | | | | |
| constituting composition | | | | | | | | |
| side reinforcing rubber | C-1 | E-1 | E-20 | E-54 | E-73 | E-74 | E-75 | E-76 |
| bead filler rubber | C-1 | C-1 | C-1 | C-1 | C-1 | C-1 | C-1 | C-1 |
| runflat durability (index) | 100 | 102 | 101 | 102 | 104 | 105 | 104 | 104 |

**Table 5-2**

| | Examples | | | | | | | |
|---|---|---|---|---|---|---|---|---|
| | 77 | 78 | 79 | 80 | 81 | 82 | 83 | 84 |
| Rubber composition | E-77 | E-78 | E-79 | E-80 | E-81 | E-82 | E-83 | E-84 |
| Formulation | | | | | | | | |
| natural rubber | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 |
| compound A of formula I | 0.1 | - | 0.25 | 0.25 | - | 0.5 | 0.5 | - |
| citraconimide compound A | - | 0.1 | 0.25 | - | 0.25 | 0.5 | - | 0.5 |
| acrylate compound A | 0.4 | 0.4 | - | 0.25 | 0.25 | - | 0.5 | 0.5 |
| sulfur | 6.0 | 6.0 | 5.0 | 5.0 | 6.0 | 5.0 | 5.0 | 6.0 |
| Properties of vulcanized rubber composition (index) | | | | | | | | |
| peak temperature | 101 | 100 | 101 | 101 | 100 | 102 | 102 | 100 |
| peak E' | 104 | 104 | 102 | 104 | 102 | 103 | 107 | 104 |
| bottom temperature | 100 | 99 | 100 | 100 | 99 | 100 | 101 | 99 |
| bottom E' | 104 | 104 | 104 | 105 | 104 | 110 | 114 | 110 |
| bottom E'/peak E' | 101 | 101 | 103 | 102 | 103 | 106 | 106 | 106 |
| E' at 250 °C | 106 | 105 | 106 | 107 | 107 | 110 | 115 | 115 |
| Tire | | | | | | | | |
| constituting composition | | | | | | | | |
| side reinforcing rubber | E-77 | E-78 | E-79 | E-80 | E-81 | E-82 | E-83 | E-84 |
| bead filler rubber | C-1 | C-1 | C-1 | C-1 | C-1 | C-1 | C-1 | C-1 |
| runflat durability (index) | 105 | 104 | 105 | 106 | 105 | 110 | 114 | 111 |

**Table 5-3**

| | Examples | | | | | | | | |
|---|---|---|---|---|---|---|---|---|---|
| | 85 | 86 | 87 | 88 | 89 | 90 | 91 | 92 | 93 |
| Rubber composition | E- | E- | E- | E- | E- | E- | E- | E- | E- |
| | 85 | 86 | 87 | 88E | 89 | 90 | 91 | 92 | 93 |
| Formulation | | | | | | | | | |
| natural rubber | 30.0 | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 | 2.0 |
| vulcanization accelerator | 2.5 | 2.5 | 2.5 | 2.5 | 2,5 | 2.5 | 2.5 | 2.5 | 2.5 |
| compound A of formula I | 1.0 | 1.0 | - | 1.5 | 1.5 | - | 3.0 | 3.0 | - |
| citraconimide compound A | 1.0 | - | 1.0 | 1.5 | - | 1.5 | 3.0 | - | 3.0 |
| acrylate compound A | - | 1.0 | 1.0 | - | 1.5 | 1.5 | - | 3.0 | 3.0 |
| sulfur | 5.0 | 5.0 | 6.0 | 5.0 | 5.0 | 6.0 | 5.0 | 5.0 | 6.0 |
| Properties of vulcanized rubber composition (index) | | | | | | | | | |
| peak temperature | 103 | 102 | 100 | 104 | 103 | 101 | 107 | 107 | 102 |
| peak E' | 104 | 109 | 105 | 106 | 111 | 107 | 110 | 116 | 109 |
| bottom temperature | 100 | 101 | 98 | 100 | 101 | 97 | 99 | 100 | 93 |
| bottom E' | 114 | 118 | 114 | 119 | 122 | 118 | 132 | 134 | 130 |
| bottom E'/peak E' | 109 | 108 | 109 | 113 | 111 | 111 | 120 | 116 | 120 |
| E' at 250 °C | 114 | 117 | 119 | 117 | 121 | 124 | 133 | 134 | 140 |
| Tire | | | | | | | | | |
| constituting composition | | | | | | | | | |
| side reinforcing rubber | E- | E- | E- | E- | E- | E- | E- | E- | E- |
| | 85 | 86 | 87 | 88E | 89 | 90 | 91 | 92 | 93 |
| bead filler rubber | C-1 | C-1 | C-1 | C-1 | C-1 | C-1 | C-1 | C-1 | C-1 |
| runflat durability (index) | 115 | 119 | 115 | 120 | 124 | 120 | 135 | 136 | 135 |

**Table 5-4**

| | Examples | | | | | | | | |
|---|---|---|---|---|---|---|---|---|---|
| | 94 | 95 | 96 | 97 | 98 | 99 | 100 | 101 | 102 |
| Rubber composition | E- | E- | E- | E- | E- | E- | E- | E- | E- |
| | 94 | 95 | 96 | 97 | 98 | 99 | 100 | 101 | 102 |
| Formulation | | | | | | | | | |
| natural rubber | 30.0 | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 | 2.5 |
| compound A of formula I | 5.0 | 5.0 | - | 1.0 | 1.5 | 3.0 | 3.0 | 5.0 | 5.0 |
| citraconimide compound A | 5.0 | - | 5.0 | 1.0 | 1.5 | 3.0 | 3.0 | 5.0 | 5.0 |
| acrylate compound A | - | 5.0 | 5.0 | 1.0 | 1.5 | 3.0 | 5.0 | 5.0 | 10.0 |
| sulfur | 5.0 | 5.0 | 6.0 | 5.0 | 5.0 | 5.0 | 5.0 | 5.0 | 5.0 |
| Properties of vulcanized rubber composition (index) | | | | | | | | | |
| peak temperature | 110 | 110 | 103 | 103 | 104 | 108 | 108 | 111 | 111 |
| peak E' | 113 | 120 | 112 | 109 | 111 | 118 | 120 | 123 | 124 |
| bottom temperature | 99 | 100 | 91 | 99 | 97 | 94 | 91 | 89 | 87 |
| bottom E' | 139 | 142 | 138 | 124 | 130 | 152 | 156 | 164 | 167 |
| bottom E'/peak E' | 123 | 119 | 124 | 113 | 118 | 129 | 131 | 134 | 135 |
| E' at 250 °C | 140 | 142 | 148 | 125 | 132 | 158 | 162 | 171 | 173 |
| Tire | | | | | | | | | |
| constituting composition | | | | | | | | | |
| side reinforcing rubber | E- | E- | E- | E- | E- | E- | E- | E- | E- |
| | 94 | 95 | 96 | 97 | 98 | 99 | 100 | 101 | 102 |
| bead filler rubber | C-1 | C-1 | C-1 | C-1 | C-1 | C-1 | C-1 | C-1 | C-1 |
| runflat durability (index) | 144 | 147 | 146 | 125 | 133 | 157 | 164 | 176 | 178 |

**Table 5-5**

| | Examples | | | | | | | |
|---|---|---|---|---|---|---|---|---|
| | 7 | 26 | 61 | 103 | 104 | 105 | 106 | 107 |
| Rubber composition | E-7 | E-26 | E-61 | E- | E- | E- | E- | E- |
| | | | | 103 | 104 | 105 | 106 | 107 |
| Formulation | | | | | | | | |
| natural rubber | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 |
| vulcanization accelerator | 2.5 | 2.5 | 2.6 | 2.5 | 2.5 | 2.5 | 2.5 | 2.5 |
| compound A of formula I | 0.4 | - | - | 0.4 | 0.4 | - | 0.1 | 0.1 |
| citraconimide compound A | - | 0.4 | - | 0.1 | - | 0.4 | 0.4 | - |
| acrylate compound A | - | - | 0.4 | - | 0.1 | 0.1 | - | 0.4 |
| sulfur | 5.0 | 6.0 | 6.0 | 5.0 | 5.0 | 6.0 | 6.0 | 6.0 |
| Properties of vulcanized rubber composition (index) | | | | | | | | |
| peak temperature | 100 | 100 | 100 | 100 | 100 | 100 | 101 | 101 |
| peak E' | 100 | 100 | 102 | 100 | 101 | 103 | 102 | 104 |
| bottom temperature | 101 | 99 | 100 | 100 | 100 | 98 | 99 | 100 |
| bottom E' | 101 | 101 | 101 | 101 | 103 | 103 | 103 | 104 |
| bottom E'/peak E' | 101 | 101 | 100 | 102 | 102 | 101 | 102 | 101 |
| E' at 250 °C | 103 | 102 | 103 | 104 | 105 | 105 | 104 | 106 |
| Tire | | | | | | | | |
| constituting composition | | | | | | | | |
| side reinforcing rubber | C-1 | C-1 | C-1 | C-1 | C-1 | C-1 | C-1 | C-1 |
| bead filler rubber | E-7 | E-26 | E-61 | E-103 | E-104 | E-105 | E-106 | E-107 |
| runflat durability (index) | 100 | 100 | 100 | 101 | 102 | 101 | 101 | 102 |

**Table 5-6**

| | Examples | | | | | | |
|---|---|---|---|---|---|---|---|
| | 108 | 109 | 110 | 111 | 112 | 113 | 114 |
| Rubber composition | E-108 | E-109 | E-110 | E-111 | E-112 | E-113 | E-114 |
| Formulation | | | | | | | |
| natural rubber | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 |
| compound A of formula I | - | 0.25 | 0.25 | - | 0.5 | 0.5 | - |
| citraconimide compound A | 0.1 | 0.25 | - | 0.25 | 0.5 | - | 0.5 |
| acrylate compound A | 0.4 | - | 0.25 | 0.25 | - | 0.5 | 0.5 |
| sulfur | 6.0 | 5.0 | 5.0 | 6.0 | 5.0 | 5.0 | 6.0 |
| Properties of vulcanized rubber composition (index) | | | | | | | |
| peak temperature | 100 | 101 | 101 | 100 | 102 | 102 | 100 |
| peak E' | 104 | 102 | 104 | 102 | 103 | 107 | 104 |
| bottom temperature | 99 | 100 | 100 | 99 | 100 | 101 | 99 |
| bottom E' | 104 | 104 | 105 | 104 | 110 | 114 | 110 |
| bottom E'/peak E' | 101 | 103 | 102 | 103 | 106 | 106 | 106 |
| E' at 250 °C | 105 | 106 | 107 | 107 | 110 | 115 | 115 |
| Tire | | | | | | | |
| constituting composition | | | | | | | |
| side reinforcing rubber | C-1 | C-1 | C-1 | C-1 | C-1 | C-1 | C-1 |
| bead filler rubber | E-108 | E-109 | E-110 | E-111 | E-112 | E-113 | E-114 |
| runflat durability (index) | 102 | 102 | 103 | 102 | 104 | 106 | 105 |

**Table 5-7**

| | Examples | | | | | | | | |
|---|---|---|---|---|---|---|---|---|---|
| | 115 | 116 | 117 | 118 | 119 | 120 | 121 | 122 | 123 |
| Rubber composition | E- | E11 | E- | E- | E- | E- | E- | E- | E- |
| | 115 | 6 | 117 | 118 | 119 | 120 | 121 | 122 | 123 |
| Formulation | | | | | | | | | |
| natural rubber | 30.0 | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 | 2.5 | 2.5 |
| compound A of formula I | 1.0 | 1.0 | - | 1.5 | 1.5 | - | 3.0 | 3.0 | - |
| citraconimide compound A | 1.0 | - | 1.0 | 1.5 | - | 1.5 | 3.0 | - | 3.0 |
| acrylate compound A | - | 1.0 | 1.0 | - | 1.5 | 1.5 | - | 3.0 | 3.0 |
| sulfur | 5.0 | 5.0 | 6.0 | 5.0 | 5.0 | 6.0 | 5.0 | 5.0 | 6.0 |
| Properties of vulcanized rubber composition (index) | | | | | | | | | |
| peak temperature | 103 | 102 | 100 | 104 | 103 | 101 | 107 | 107 | 102 |
| peakE' | 104 | 109 | 105 | 106 | 111 | 107 | 110 | 116 | 109 |
| bottom temperature | 100 | 101 | 98 | 100 | 101 | 97 | 99 | 100 | 93 |
| bottom E' | 114 | 118 | 114 | 119 | 122 | 118 | 132 | 134 | 130 |
| bottom E'/peak E' | 109 | 108 | 109 | 113 | 111 | 111 | 120 | 116 | 120 |
| E' at 250 °C | 114 | 117 | 119 | 117 | 121 | 124 | 133 | 134 | 140 |
| Tire | | | | | | | | | |
| constituting composition | | | | | | | | | |
| side reinforcing rubber | C-1 | C-1 | C-1 | C-1 | C-1 | C-1 | C-1 | C-1 | C-1 |
| bead filler rubber | E- | E11 | E- | E- | E- | E- | E- | E- | E- |
| | 115 | 6 | 117 | 118 | 119 | 120 | 121 | 122 | 123 |
| runflat durability (index) | 106 | 108 | 107 | 108 | 111 | 109 | 114 | 117 | 114 |

**Table 5-8**

| | Examples | | | | | | | | |
|---|---|---|---|---|---|---|---|---|---|
| | 124 | 125 | 126 | 127 | 128 | 129 | 130 | 131 | 132 |
| Rubber composition | E- | E- | E- | E- | E- | E- | E- | E- | E- |
| | 124 | 125 | 126 | 127 | 128 | 129 | 130 | 131 | 132 |
| Formulation | | | | | | | | | |
| natural rubber | 30.0 | 30.0 | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 | 2.0 | 2.0 |
| vulcanization accelerator | 2.5 | 2.5 | 2.5 | 2.5 | 2.6 | 2.6 | 2.5 | 2.5 | 2.5 |
| compound A of formula I | 5.0 | 5.0 | - | 1.0 | 1.5 | 3.0 | 3.0 | 5.0 | 5.0 |
| citraconimide compound A | 5.0 | - | 5.0 | 1.0 | 1.5 | 3.0 | 3.0 | 5.0 | 5.0 |
| acrylate compound A | - | 5.0 | 5.0 | 1.0 | 1.5 | 3.0 | 5.0 | 5.0 | 10.0 |
| sulfur | 5.0 | 5.0 | 6.0 | 5.0 | 5.0 | 5.0 | 5.0 | 5.0 | 5.0 |
| Properties of vulcanized rubber composition (index) | | | | | | | | | |
| peak temperature | 110 | 110 | 103 | 103 | 104 | 108 | 108 | 111 | 111 |
| peak E' | 113 | 120 | 112 | 109 | 111 | 118 | 120 | 123 | 124 |
| bottom temperature | 99 | 100 | 91 | 99 | 97 | 94 | 91 | 89 | 87 |
| bottom E' | 139 | 142 | 138 | 124 | 130 | 152 | 156 | 164 | 167 |
| bottom E'/peak E' | 123 | 119 | 124 | 113 | 118 | 129 | 131 | 134 | 135 |
| E' at 250 °C | 140 | 142 | 148 | 125 | 132 | 158 | 162 | 171 | 173 |
| Tire | | | | | | | | | |
| constituting composition | | | | | | | | | |
| side reinforcing rubber | C-1 | C-1 | C-1 | C-1 | C-1 | C-1 | C-1 | C-1 | C-1 |
| bead filler rubber | E- | E- | E- | E- | E- | E- | E- | E- | E- |
| | 124 | 125 | 126 | 127 | 128 | 129 | 130 | 131 | 132 |
| runflat durability (index) | 118 | 123 | 120 | 111 | 114 | 124 | 126 | 131 | 132 |

**Table 5-9**

| | Examples | | | | | | |
|---|---|---|---|---|---|---|---|
| | 133 | 134 | 135 | 136 | 137 | 138 | 139 |
| Rubber composition | E-133 | E-134 | E-135 | E-136 | E-137 | E-138 | E-139 |
| Formulation | | | | | | | |
| natural rubber | 30.0 | 30.0 | 30.0 | 30.0 | 30.0 | 30.0 | 30.0 |
| butadiene rubber | 70.0 | 70.0 | 70.0 | 70.0 | 70.0 | 70.0 | 70.0 |
| carbon black | 60.0 | 60.0 | 60.0 | 60.0 | 60.0 | 60.0 | 60.0 |
| softening agent | 3.0 | 3.0 | 3.0 | 3.0 | 3.0 | 3.0 | 3.0 |
| zinc white | 5.0 | 5.0 | 5.0 | 5.0 | 5.0 | 5.0 | 5.0 |
| stearic acid | 1.0 | 1.0 | 1.0 | 1.0 | 1.0 | 1.0 | 1.0 |
| antioxidant | 2.0 | 2.0 | 2.0 | 2.0 | 2.0 | 2.0 | 2.0 |
| vulcanization accelerator | 2.5 | 2.5 | 2.5 | 2.5 | 2.5 | 2.5 | 2.5 |
| compound A of formula I | 1.5 | 1.5 | - | 3.0 | 3.0 | - | 5.0 |
| citraconimide compound A | 1.5 | - | 1.5 | 3.0 | - | 3.0 | 5.0 |
| acrylate compound A | - | 1.5 | 1.5 | - | 3.0 | 3.0 | - |
| sulfur | 5.0 | 5.0 | 6.0 | 5.0 | 5.0 | 6.0 | 5.0 |
| Properties of vulcanized rubber composition (index) | | | | | | | |
| peak temperature | 104 | 103 | 101 | 107 | 107 | 102 | 110 |
| peak E' | 106 | 111 | 107 | 110 | 116 | 109 | 113 |
| bottom temperature | 100 | 101 | 97 | 99 | 100 | 93 | 99 |
| bottom E' | 119 | 122 | 118 | 132 | 134 | 130 | 139 |
| bottom E'/peak E' | 113 | 111 | 111 | 120 | 116 | 120 | 123 |
| E' at 250 °C | 117 | 121 | 124 | 133 | 134 | 140 | 140 |
| Tire | | | | | | | |
| constituting composition | | | | | | | |
| side reinforcing rubber | E-133 | E-134 | E-135 | E-136 | E-137 | E-138 | E-139 |
| bead filler rubber | E-133 | E-134 | E-135 | E-136 | E-137 | E-138 | E-139 |
| runflat durability (index) | 137 | 141 | 136 | 161 | 162 | 161 | 172 |

**Table 5-10**

| | Examples | | | | | |
|---|---|---|---|---|---|---|
| | 140 | 141 | 142 | 143 | 144 | 145 |
| Rubber composition | E-140 | E-141 | E-142 | E-143 | E-144 | E-145 |
| Formulation | | | | | | |
| natural rubber | 30.0 | 30.0 | 30.0 | 30.0 | 30.0 | 30.0 |
| butadiene rubber | 70.0 | 70.0 | 70.0 | 70.0 | 70.0 | 70.0 |
| carbon black | 60.0 | 60.0 | 60.0 | 60.0 | 60.0 | 60.0 |
| softening agent | 3.0 | 3.0 | 3.0 | 3.0 | 3.0 | 3.0 |
| zinc white | 5.0 | 5.0 | 5.0 | 5.0 | 5.0 | 6.0 |
| stearic acid | 1.0 | 1.0 | 1.0 | 1.0 | 1.0 | 1.0 |
| antioxidant | 2.0 | 2.0 | 2.0 | 2.0 | 2.0 | 2.0 |
| vulcanization accelerator | 2.5 | 2.5 | 2.5 | 2.5 | 2.5 | 2.5 |
| compound A of formula I | 5.0 | - | 1.5 | 3.0 | 3.0 | 5.0 |
| citraconimide compound A | - | 5.0 | 1.5 | 3.0 | 3.0 | 5.0 |
| acrylate compound A | 5.0 | 5.0 | 1.5 | 3.0 | 5.0 | 5.0 |
| sulfur | 5.0 | 6.0 | 5.0 | 5.0 | 5.0 | 5.0 |
| Properties of vulcanized rubber composition (index) | | | | | | |
| peak temperature | 110 | 103 | 104 | 108 | 108 | 111 |
| peak E' | 120 | 112 | 111 | 118 | 120 | 123 |
| bottom temperature | 100 | 91 | 97 | 94 | 91 | 89 |
| bottom E' | 142 | 138 | 130 | 152 | 156 | 164 |
| bottom E'/peak E' | 119 | 124 | 118 | 129 | 131 | 134 |
| E' at 250 °C | 142 | 148 | 132 | 158 | 162 | 171 |
| Tire | | | | | | |
| constituting composition | | | | | | |
| side reinforcing rubber | E-140 | E-141 | E-142 | E-143 | E-144 | E-145 |
| bead filler rubber | E-140 | E-141 | E-142 | E-143 | E-144 | E-145 |
| runflat durability (index) | 174 | 171 | 159 | 200 | 206 | 220 |

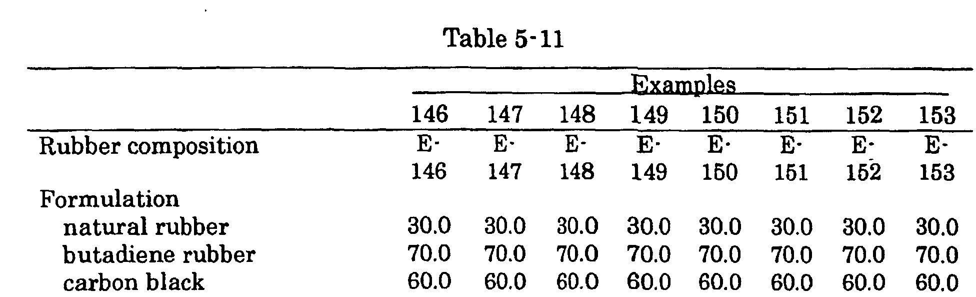

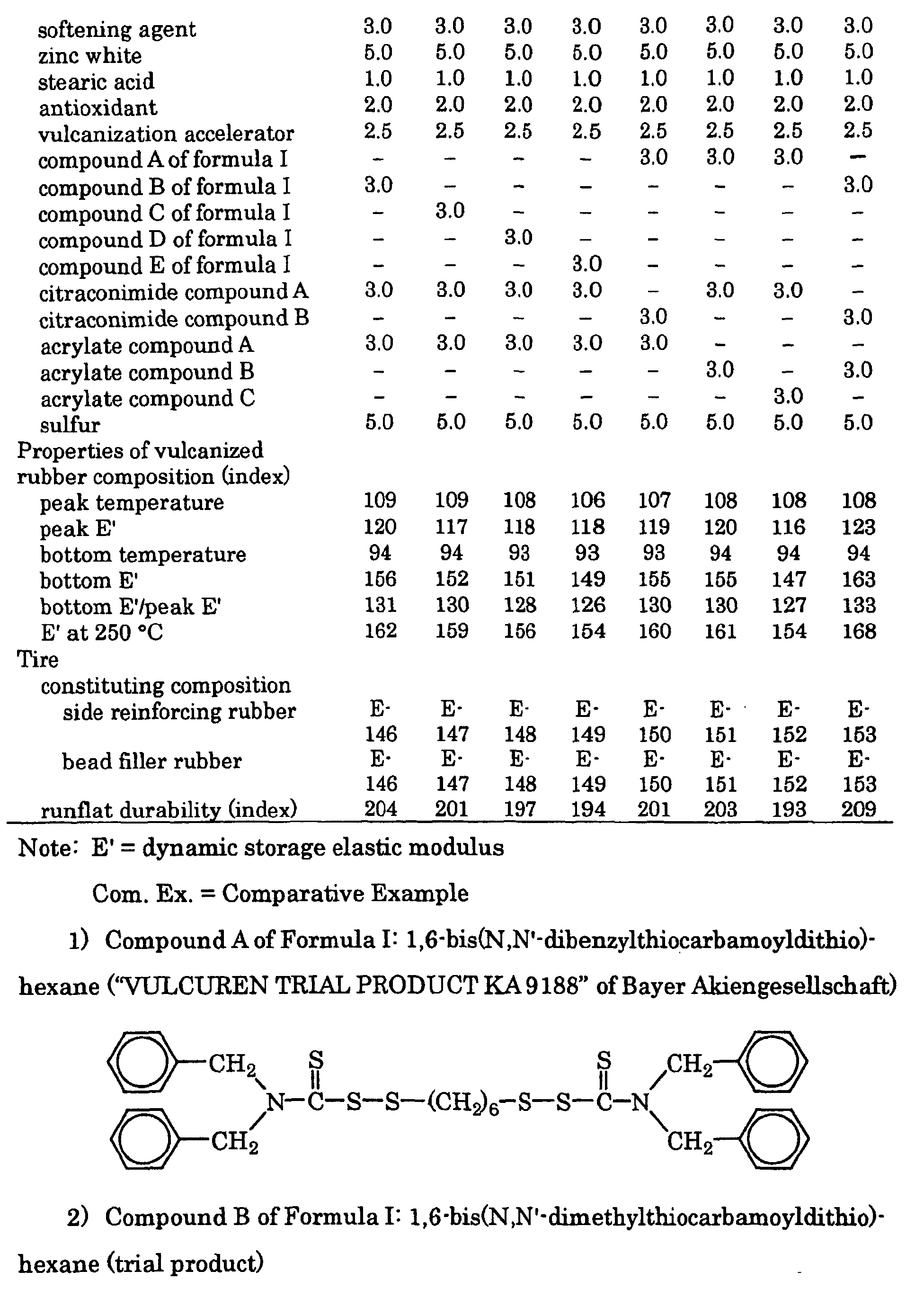

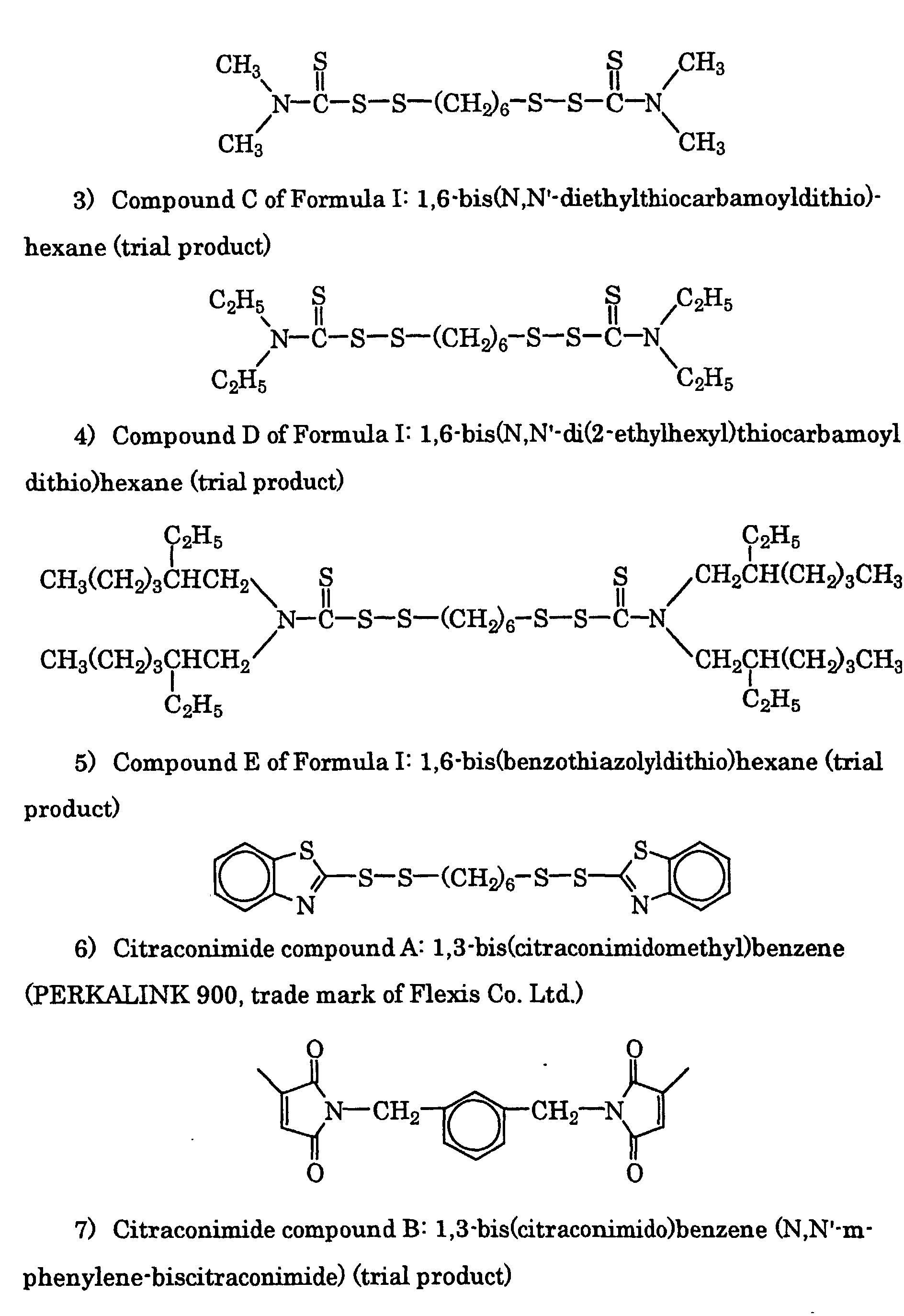

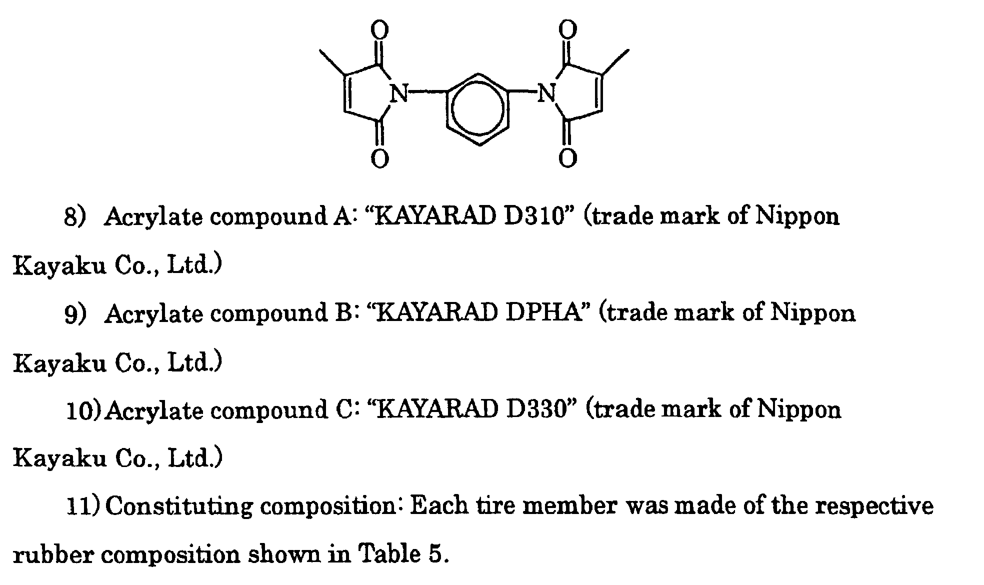

In Examples 73 to 102, the reinforcing layer for sidewall (side reinforcing rubber) was made of the rubber composition of the invention. In Examples 103 to 132, the rubber composition of the invention was used for forming the bead filler. In Examples 133 to 153, both the side reinforcing rubber and the bead filler were made of the rubber composition of the invention.

As seen from Table 5, the heat resistance was improved in the rubber compositions of the invention containing two or three kinds of compounds as the component B. In addition, the pneumatic tires having a bead filler or a reinforcing layer for sidewall made of the rubber composition of the invention is good in the runflat durability. In particular, the runflat durability is excellent when both the bead filler and the reinforcing layer for sidewall are made of the rubber composition of the invention.

### Industrial Applicability

According to the present invention, a rubber composition having improved heat resistance is obtained, which is suitable, particularly, for a reinforcing rubber for tire sidewall portion and as a bead filler rubber for tires. A pneumatic tire having a reinforcing layer for sidewall portion or a bead filler both made of the rubber composition of the invention is excellent in the durability during the tire operation under runflat conditions and can be operated for extremely extended distances.

## Claims

1. A rubber composition comprising (A) a natural rubber and/or a synthetic diene rubber and (B) at least one compound selected from the group consisting of a compound represented by the following Formula I:
R¹-S-S-A-S-S-R² (I)
wherein A represents an alkylene group having 2 to 10 carbon atoms, R¹ and R² each independently represents a monovalent nitrogen-containing organic group; a citraconimide compound; and an acrylate compound.

2. The rubber composition according to claim 1, wherein A in Formula I is hexamethylene group.

3. The rubber composition according to claim 1 or 2, wherein each of R¹ and R² in Formula I is a monovalent organic group containing at least one aromatic ring in addition to nitrogen atom.

4. The rubber composition according to any one of claims 1 to 3, wherein each of R¹ and R² in Formula I is a monovalent organic group containing =N-C(=S)-which bonds to a dithio group through its carbon atom.

5. The rubber composition according to claim 4, wherein the compound of Formula I is an α,ω-bis(N,N'-dihydrocarbylthiocarbamoyldithio)alkane represented by the following Formula I-a: 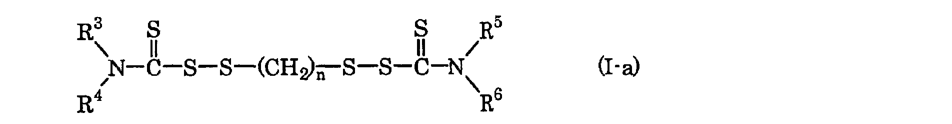 wherein each of R³ to R⁶ independently represents an alkyl group, an aryl group or an aralkyl group with the proviso that at least one of R³ and R⁴ and at least one of R⁵ and R⁶ represent an aryl group having 6 to 20 carbon atoms or an aralkyl group having 7 to 20 carbon atoms, and n is an integer from 2 to 10.

6. The rubber composition according to claim 5, wherein the compound of Formula I is 1,6-bis(N,N'-dibenzylthiocarbamoyldithio)hexane.

7. The rubber composition according to claim 1, wherein the citraconimide compound is a biscitraconimide compound.

8. The rubber composition according to claim 7, wherein the biscitraconimide compound is represented by the following Formula II: 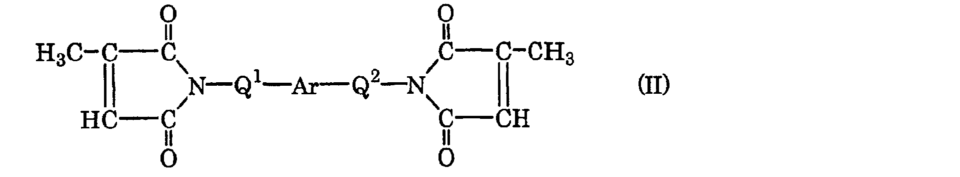 wherein Ar represents an arylene group, and Q¹ and Q² each independently represents an alkylene group having 1 to 4 carbon atoms.

9. The rubber composition according to claim 7, wherein the biscitraconimide compound is 1,3-bis(citraconimido)benzene.

10. The rubber composition according to claim 8, wherein the biscitraconimide compound is 1,3-bis(citraconimidomethyl)benzene.

11. The rubber composition according to claim 1, wherein the acrylic compound is a multifunctional ester compound obtained by the reaction of a polyhydric compound with acrylic acid, or by the reaction of a polyhydric compound with acrylic acid and another carboxylic acid.

12. The rubber composition according to claim 11, wherein the acrylic compound is represented by the following Formula III: 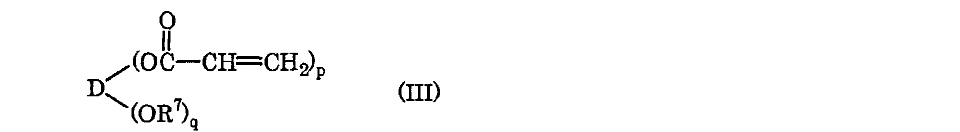 wherein D represents a residue derived from a (p+q) valent polyhydric alcohol by removing a hydroxyl group and R⁷ represents a hydrogen or an acyl group other than acryloyl group, p is an integer from 2 to 10, q is an integer from 0 to 8, and p+q is 2 to 10.

13. The rubber composition according to claim 12, wherein p is an integer from 3 to 6, q is an integer of from 0 to 3, and p + q is from 3 to 6.

14. The rubber composition according to claim 13, wherein the acrylic compound is a multifunctional ester compound obtained by the reaction of acrylic acid and a dipentaerythritol having 3 to 6 acryloyl groups.

15. The rubber composition according to claim 14, wherein the acrylic compound is an acyl-modified dipentaerythritol acrylate having 3 to 5 acryloyl groups.

16. The rubber composition according to any one of claims 11 to 15, wherein the rubber composition is produced by kneading a rubber with the acrylate compound at a maximum temperature of 140 °C to disperse the acrylate compound in the rubber.

17. The rubber composition according to any one of claims 11 to 15, wherein the rubber composition is produced by kneading a rubber with the acrylate compound at a maximum temperature of 120 °C to disperse the acrylate compound in the rubber.

18. The rubber composition according to any one of claims 1 to 17, which comprises (A) the natural rubber and/or the synthetic diene rubber and (B) at least two compounds selected from the group consisting of the compound represented by the following Formula I:
R¹-S-S-A-S-S-R² (I)
wherein A represents an alkylene group having 2 to 10 carbon atoms, R¹ and R² each independently represents a monovalent nitrogen-containing organic group; the citraconimide compound; and the acrylate compound.

19. The rubber composition according to any one of claims 1 to 18, wherein the component B is contained in an amount of 0.5 to 20 parts by weight based on 100 parts by weight of the component A.

20. The rubber composition according to claim 19, wherein the component B is contained in an amount of 0.7 to 15 parts by weight based on 100 parts by weight of the component A.

21. The rubber composition according to any one of claims 1 to 20, which is used for a bead filler rubber for tires.

22. The rubber composition according to any one of claims 1 to 20, which is used for a reinforcing rubber for tire sidewall portions.

23. A pneumatic tire having a pair of right and left ring bead cores, a bead filler provided radially outward of each of the bead cores, a carcass layer comprising at least one ply which comprises a plurality of parallel cords embedded in a coating rubber, a belt layer provided radially outward of the carcass layer, a tread portion provided radially outward of the belt layer, a pair of sidewall portions provided at both right and left lateral edges of the tread portion, and a reinforcing rubber layer provided at the sidewall portions, the reinforcing rubber layer for the sidewall portions and/or the bead filler being made of the rubber composition defined in any of claims 1 to 20.
